# EUROPEAN PATENT SPECIFICATION

(11) **EP 1 940 272 B1**
(45) Date of publication and mention of the grant of the patent: **29.07.2009**
(21) Application number: 06809084.4
(22) Date of filing: 20.10.2006
(51) Int. Cl.: A47J 43/07, A23G 9/12

(54) **EQUIPMENT FOR FOOD PREPARATION PROVIDED WITH A DOUBLE-WALLED PROCESS TANK**
GERÄT FÜR DIE ZUBEREITUNG VON LEBENSMITTELN MIT EINEM DOPPELWANDIGEN VERARBEITUNGSGEFÄSS
EQUIPEMENT DESTINE A LA PREPARATION D'ALIMENTS DOTE D'UN RESERVOIR DE TRAITEMENT A DOUBLE PAROI

(30) Priority: 27.10.2005 IT BO20050654
(43) Date of publication of application: 09.07.2008
(73) Proprietor: Malavasi, Giuseppe, 40010 San Marino di Bentivoglio (BO) (IT)
(72) Inventor: Malavasi, Giuseppe, 40010 San Marino di Bentivoglio (BO) (IT)
(74) Representative: Provvisionato, Paolo
(86) International application number: PCT/IB2006/002947
(87) International publication number: WO 2007/049116

(56) References cited:
- WO-A-86/06936
- GB-A- 2 153 514
- US-A- 3 952 538
- US-A- 4 583 863
- US-A1- 2005 223 906

## Description

### Field of the art

the present invention concerns the technology for equipment for the preparation of food products, as specified in the international Classification A 47j.

### State of the art

Various kinds of equipment for the preparation of food products with double-walled process tanks are known. All the known equipments have the problem of restoring the hermetic sealing of the interstice when the process interstice, removed from the basement to allow the frequent and necessary cleaning operations, needs to be reset in operating position.

In the known equipment, the process tank needs to be disconnected and reconnected. Said operation need the intervention on the fittings of the conduits that allow the circulation of the heat exchanger fluid. Document US-4583863 discloses an equipement for food preparation.

The solution proposed by the present invention allows the rapid manipulation of the process tank without the need to intervene on the exchanger circuit.

### Description

The invention is now disclosed with reference to the schematic figures of the drawings, attached as a unrestrictive example.

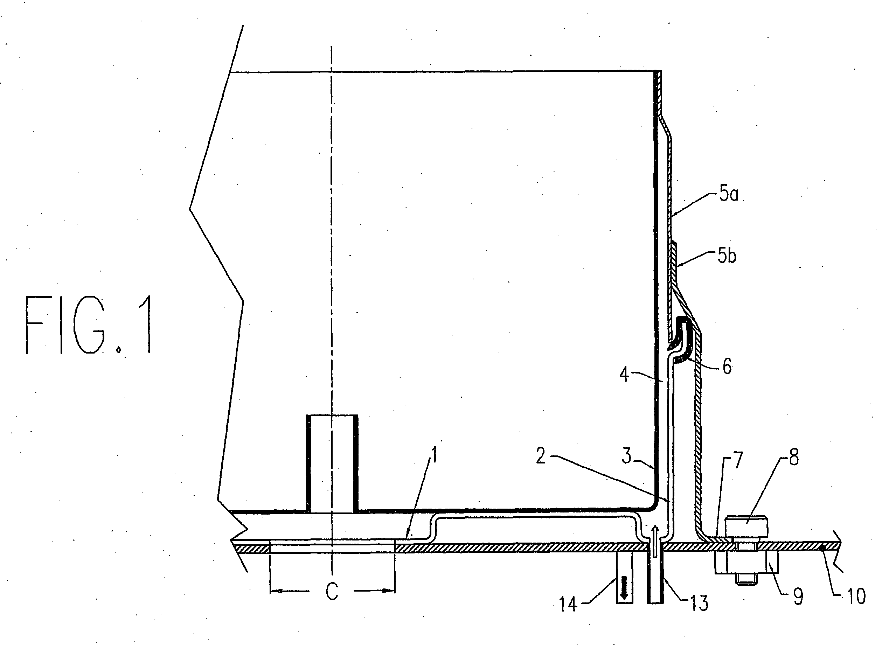

Figure 1 represents a schematic section of a double-walled tank (3) in whose interstice (4) an heat exchanger fluid circulates, fed by the fittings (13; 14). It should be noticed that fittings are fixed to the plate (10) while the tank (3) can be disconnected and reconnected without the need to intervene on said fittings.

It should be pointed out the fact that the hermetic conditions of the interstice (4) is safeguarded by the specific profile of the labyrinth sealing ring (6) engaged between the external appendixes (5a; 5b) peripherally applied outside of said process tank. It should also be pointed out that the sealing of said labyrinth seal (6), besides allowing the quick loading and unloading of the tank (3), it also ensures the full hermetic conditions of the interstice by virtue of the two contact zones against the wall of said appendixes (5a; 5b) of the tank (13).

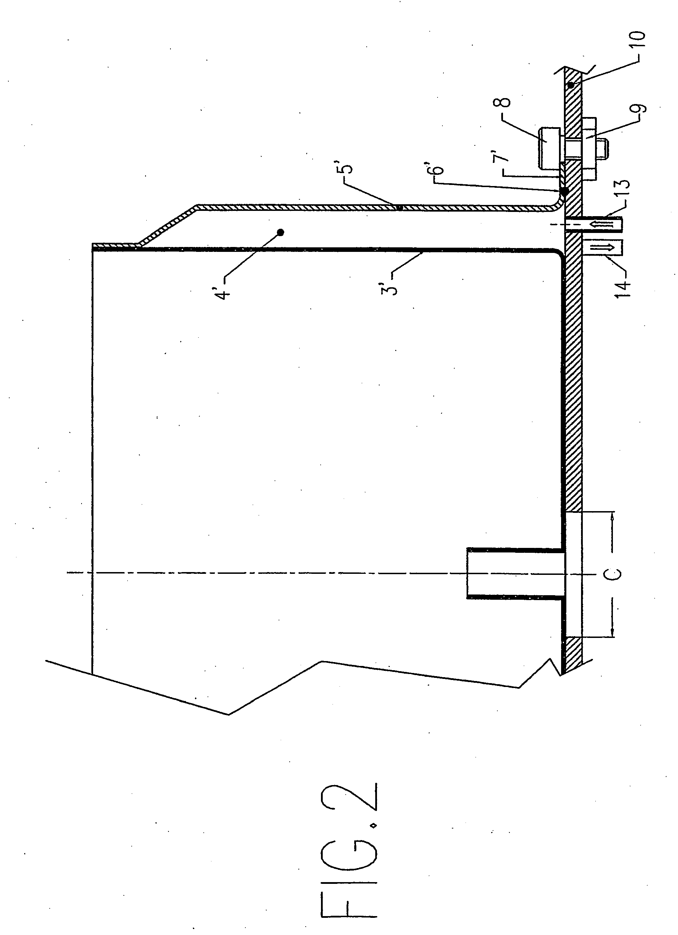

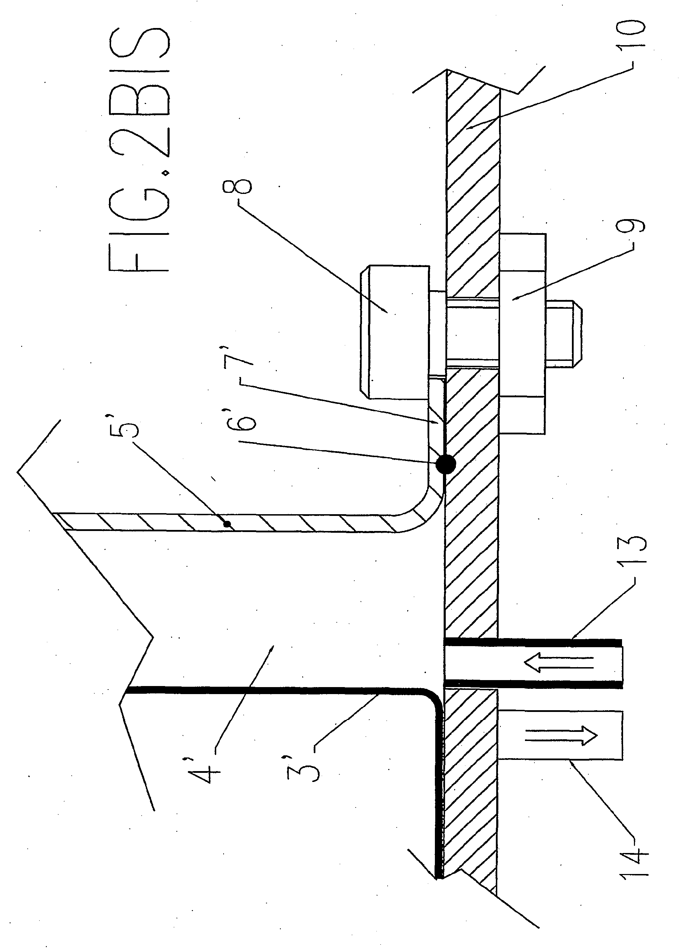

Figure 2 represents a simplified alternative solution. It should be noticed that the hermetic conditions of the interstice is realized through a toroidal (6') directly applied on the plate (10).

Figure 2bis highlights in detail the function of the sealing ring (6') that sets the hermetic conditions of the interstice (4'), inside of which an heat exchanger fluid circulates.

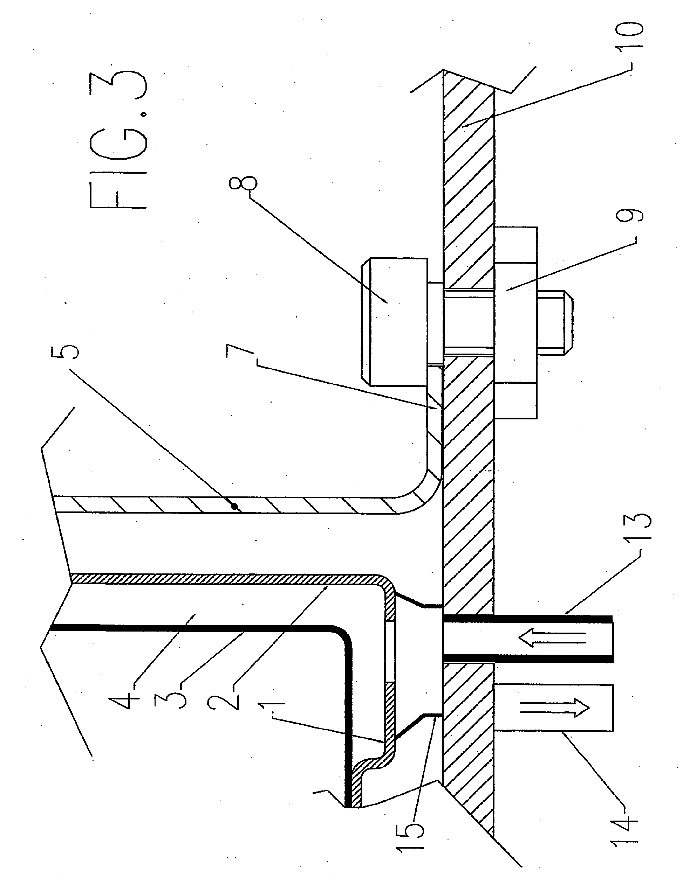

Figure 3 shows a variation comprising the insertion of a sealing manifold (15) by the fixed fittings (13; 14). Said sealing manifold ensures the hermetic conditions of the interstice (4) inside of which an heat exchanger fluid circulates.

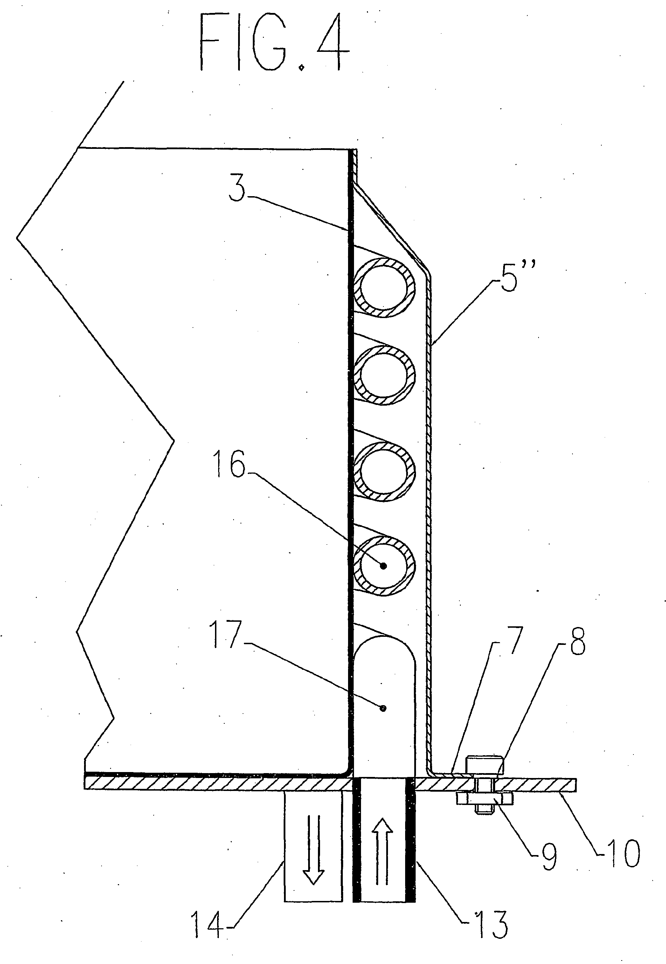

Figure 4 shows a further variation comprising the introduction of a pipe coil (16) inside which the exchanger fluid circulates. It can be noticed that said appendixes (17) of said exchanger pipe coil (16) are directly connected with the fittings (13; 14).

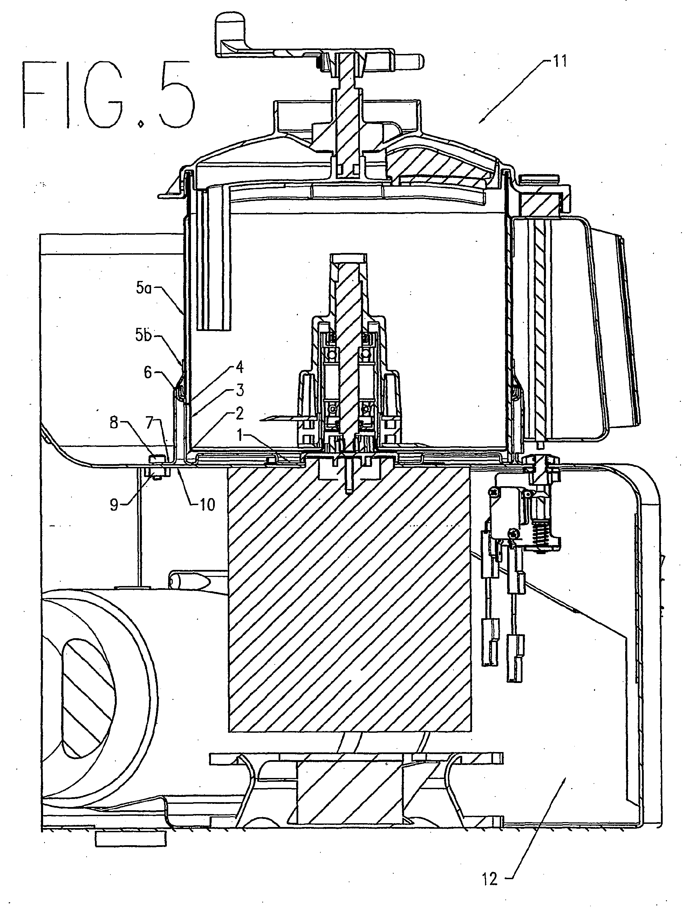

Figure 5 represents in a schematic section the combination of the upper operating unit (11) connected to the motorized lower unit (12). Said quick connection allows the restoring of the fittings-(13; 14) with the feeding circuit of the fluid exchanger. The simplicity of the connecting operations is clear, since these don't require any intervention on the fittings (13; 14).

Upon observation of the attached drawings one will appreciate the great benefits of the solution proposed by the present invention. The fittings (13; 14) of the exchanger fluid's circuit are fixed on the plate (10), thus allowing the connection and disconnection of the process tank without the need to intervene on said fittings the circulation of the heat exchanger fluid happens. The simplicity of said connecting operation is very quick and efficient without the need of intervening on the specific fittings (13; 14).

It should also be pointed out that the figures show only schematically the finding that is the object of the present invention. The invention of course allows for several variations of practical realization both for the dimensioning and structural proportioning of the various components, as well as for the construction material and to the technological choices concerning their construction.

The clearness of the figures highlights,the operational simplicity of the equipment that is the object of the present invention, also allowing to assess the economy of realization and operation.

All the equipment for the preparation of food products with double-walled process tank presenting the original characteristics specific of the present invention as basically described, illustrated and hereinafter claimed, will be considered as being included in the protection sphere of the present invention.

It should also be pointed out that the inventive core of the invention consists in the ability of rapidly connecting and disconnecting two operating units (11, 12), safeguarding the simultaneous restoring of the hermetic conditions of the process tank without the need to intervene on the fittings (13; 14) of the exchanger fluid feeding circuit.
It should be pointed out that the in the attached drawings each single detail is marked as follows:
1 indicates a disc with the centering hole (C) and a raised edge.
2 indicates the raised edge of said disc with central centering hole ( C )
3 indicates a variant in the process tank.
4 indicates the double-walled gap for the circulation of the exchanger fluid.
4' indicates a variant of the gap within which the exchanger fluid circulates.
5a and 5b indicate the external appendixes fixed on the process tank (3).
5' indicates a variant to an external appendix fixed onto the process tank (3').
5" indicates an-external appendix surrounding the exchanger pipe coil in variant to the invention.
6 indicates a profiled sealing ring to safeguard the hermetic conditions of the gap.
7 indicates the flat edge for the fast connection of the tank to the fixed plate (10),
8 indicates a locking screw fixed on the plate (10).
9 indicates the locking bolt of said screw (8)
10 indicates the fixing plate of the tank.
11 indicates upper operating unit.
12 indicates the lower motorized unit.
13 and 14 indicate the fixed fittings of the (10).
15 indicates a sealing manifold for the hermetic linking of the gap (4) to the fittings (13; 14) of the circulation circuit of the exchanger fluid.
16 indicates a pipe coil for the circulation of an exchanger fluid.
17 indicates a linking for the quick connection to the pipe coil (16).

Any average technician skilled in this specific technological field, now that the inventive combinations of the invention have been disclosed, will be able to realize without any inventive effort, equipment to prepare food products with a double-walled process tank, with the original characteristics as basically described, illustrated and hereinafter claimed.

## Claims

1. An equipment for the preparation of food products provided with a double-walled process tank, comprising an upper operating unit, including a removable double walled process tank (3; 3') with a interstice (4; 4') provided with an hermetic closing (6; 6'; 15), connected, through a quick insert (7, 7', 8, 9), to a lower motorized group (12) by a plate (10) provided with fittings (13; 14) that allow the circulation of a heat exchanger fluid located inside the interstice (4; 4') of said process tank (3, 3').

2. An equipment for the preparation of food products provided with a double-walled process tank, as in claim 1, **characterized by** the fact that the hermetic closing of the interstice (4) is safeguarded by an especially profiled sealing ring (6) steadily inserted on the upper border of the raised edge of the circular disc (1), centred on the plate (10) of the lower motorized unit (12).

3. An equipment for the preparation of food products provided with a double-walled process tank, as in claim 1, **characterized by** the fact that the hermetic closing of the interstice (4') is guaranteed by a toroidal sealing ring (6') directly applied on the plate (10) of the lower motorized unit (12).

4. An equipment for the preparation of food products provided with a double-walled process tank, as in previous claims, **characterized by** the fact that the hermetic sealing of the interstice is ensured by a manifold (15) especially located by the fittings (13; 14).

5. An equipment for the preparation of food products provided with a double-walled process tank, as in previous claims, **characterized by** the fact that within the double wall a pipe coil (16) is inserted for the circulation of an exchanger fluid, being such pipe coil directly linked to the fittings (13; 14) of the feeding circuit of the exchanger fluid.

## Patentansprüche

1. Gerät für die Zubereitung von Lebensmitteln mit einem doppelwandigen Verarbeitungsgefäß, umfassend eine obere Betriebseinheit mit einem entfernbaren doppelwandigen Verarbeitungsgefäß (3; 3') mit einem Zwischenraum (4; 4'), der mit einem hermetischen Verschluss (6; 6'; 15) versehen ist, wobei das Verarbeitungsgefäß durch einen Schnelleinsatz (7, 7', 8, 9) mit einer unteren motorisierten Gruppe (12) über eine Platte (10) verbunden ist, die mit Verbindungsteilen (13; 14) versehen ist, die das Zirkulieren eines im Zwischenraum (4; 4') des Verarbeitungsgefäßes (3, 3') angeordneten Wärmetauscherfluids gestatten.

2. Gerät für die Zubereitung von Lebensmitteln mit einem doppelwandigen Verarbeitungsgefäß nach Anspruch 1, **dadurch gekennzeichnet, dass** der hermetische Verschluss des Zwischenraums (4) durch einen speziell profilierten Dichtungsring (6) sichergestellt ist, der gleichmäßig an der Obergrenze des erhabenen Rands der kreisförmigen Scheibe (1)eingeführt ist, die auf der Platte (10) der unteren motorisierten Einheit (12) zentriert ist.

3. Gerät für die Zubereitung von Lebensmitteln mit einem doppelwandigen Verarbeitungsgefäß nach Anspruch 1, **dadurch gekennzeichnet, dass** der hermetische Verschluss des Zwischenraums (4') durch einen toroidalen Dichtungsring (6') gewährleistet ist, der direkt auf die Platte (10) der unteren motorisierten Einheit (12) aufgebracht ist.

4. Gerät für die Zubereitung von Lebensmitteln mit einem doppelwandigen Verarbeitungsgefäß nach den vorhergehenden Ansprüchen, **dadurch gekennzeichnet, dass** der hermetische Verschluss des Zwischenraums durch einen speziell durch die Verbindungsteile (13; 14) platzierten Verteiler (15) gewährleistet ist.

5. Gerät für die Zubereitung von Lebensmitteln mit einem doppelwandigen Verarbeitungsgefäß nach den vorhergehenden Ansprüchen, **dadurch gekennzeichnet, dass** in der Doppelwand eine Rohrschlange (16) zur Zirkulierung eines Austauscherfluids so eingeführt ist, dass diese Rohrschlange direkt mit den Verbindungsteilen (13; 14) des Zufuhrkreislaufs des Austauscherfluids verbunden ist.

## Revendications

1. Equipement pour la préparation de produits alimentaires pourvu d'une cuve de traitement à double paroi, comprenant une unité opérationnelle supérieure, incluant une cuve de traitement amovible à double paroi (3; 3') avec un interstice (4; 4') pourvu d'une fermeture hermétique (6; 6'; 15), connectée, grâce à une pièce à insertion rapide (7, 7', 8, 9), à un groupe motorisé inférieur (12) par une plaque (10) pourvue de raccords (13; 14) qui permettent la circulation d'un fluide d'échange de chaleur localisé à l'intérieur de l'interstice (4; 4') de ladite cuve de traitement (3, 3').

2. Equipement pour la préparation de produits alimentaires pourvu d'une cuve de traitement à double paroi selon la revendication 1, **caractérisé en ce que** la fermeture hermétique de l'interstice (4) est protégée par une bague d'étanchéité spécialement profilée (6) insérée de manière stable sur la bordure supérieure du bord relevé du disque circulaire (1), centré sur la plaque (10) de l'unité motorisée inférieure (12).

3. Equipement pour la préparation de produits alimentaires pourvu d'une cuve de traitement à double paroi selon la revendication 1, **caractérisé en ce que** la fermeture hermétique de l'interstice (4') est garantie par une bague d'étanchéité toroïdale (6') appliquée directement sur la plaque (10) de l'unité motorisée inférieure (12).

4. Equipement pour la préparation de produits alimentaires pourvu d'une cuve de traitement à double paroi selon l'une des revendications précédentes, **caractérisé en ce que** la fermeture hermétique de l'interstice est assurée par un collecteur (15) localisé spécialement près des raccords (13; 14).

5. Equipement pour la préparation de produits alimentaires pourvu d'une cuve de traitement à double paroi selon l'une des revendications précédentes, **caractérisé en ce qu'**un tube en serpentin (16) est inséré à l'intérieur de la double paroi pour la circulation d'un fluide d'échange, ledit tube en bobine étant directement lié aux raccords (13; 14) du circuit d'alimentation du fluide d'échange.
